# EUROPEAN PATENT SPECIFICATION

(11) **EP 4 441 324 B1**
(45) Date of publication and mention of the grant of the patent: **10.09.2025**
(21) Application number: 22826211.9
(22) Date of filing: 30.11.2022
(51) Int. Cl.: E21B 7/02, E02D 7/06, E02D 7/22, E02F 9/20

(54) **FOUNDATION MACHINE EQUIPPED WITH AN INTERCHANGEABLE ELECTRIC STORAGE SYSTEM AND A HANDLING EQUIPMENT FOR THE STORAGE SYSTEM**
FUNDAMENTMASCHINE MIT EINEM AUSTAUSCHBAREN ELEKTRISCHEN SPEICHERSYSTEM UND HANDHABUNGSAUSRÜSTUNG FÜR DAS SPEICHERSYSTEM
ENGIN DE FONDATION ÉQUIPÉ D'UN SYSTÈME DE STOCKAGE ÉLECTRIQUE INTERCHANGEABLE ET D'UN ÉQUIPEMENT DE MANIPULATION POUR LE SYSTÈME DE STOCKAGE

(30) Priority: 03.12.2021 IT 202100030644
(43) Date of publication of application: 09.10.2024
(73) Proprietor: SOILMEC S.P.A., 47522 Cesena (FC) (IT)
(72) Inventor: DITILLO, Alessandro, 47521 CESENA (FC) (IT); CURIC, Jasmin, 47030 SAN MAURO PASCOLI (FC) (IT)
(74) Representative: Torredimare, Luca
(86) International application number: PCT/IB2022/061572
(87) International publication number: WO 2023/100089

(56) References cited:
- EP-A2- 2 784 227
- WO-A1-2019/186449
- WO-A1-2020/196062
- JUNTTAN: "THE WORLD'S FIRST ELECTRIC PILE DRIVING RIG", 31 October 2021 (2021-10-31), https://junttan.com/product/pmx2e/, XP055939352, Retrieved from the Internet <URL:https://junttan.com/wp-content/uploads/2021/05/Junttan_PMx2e_Electric_Pile_Driving_Rig_EN.pdf> [retrieved on 20220706]
- BAUER: "BAUER eBG 33 Elektroantrieb Electric Drive", 30 June 2021 (2021-06-30), https://www.bauer.de/bma/company/downloads/, XP055939340, Retrieved from the Internet <URL:https://www.bauer.de/export/shared/documents/pdf/bma/datenblatter/BG_Rotary_Drilling_Rig/eBG_33_DE_EN_905_883_1_2.pdf> [retrieved on 20220706]

## Description

### Technical field

The present invention relates to a foundation construction machine equipped with an electric storage system consisting of an external structure and a plurality of storage units electrically connected to one another. Said storage system may have different geometries and can be quickly connected to the drilling equipment to supply the energy required by the drilling functions and other auxiliary functions, ensuring a few hours of continuous operation. The machine is also provided with a handling equipment for coupling and decoupling said electric storage system. The latter can thus be rapidly replaced with a similar system and recharged by means of external charging devices.

### Technical background

The invention concerns the field of machines intended for building foundations, also generally referred to as "foundation construction machines". Such machines, used in building yard environments, typically comprise a base machine, a mast or boom supported by the base machine, and operating equipment carried by the mast or boom. Such machines are also equipped with a control station for the operator, which may be located either on the machine itself, e.g. a cabin or a control board, or remotely, e.g. a radio control unit or a remote control station. The base machine may comprise an upper structure and a self-moving or mechanically mobile assembly connected to each other in a fixed or, via a slewing ring, rotatable manner, optionally with the possibility of pivoting horizontally about a preferably horizontal axis; the self-moving or mobile assembly, which is typically a tracked undercarriage, allows the foundation construction machine to move on the ground and supports the machine thereon. The upper structure is generally provided with a structural frame housing several components, e.g. a prime mover, typically a Diesel engine, or one or more electric motors, or Diesel-electric hybrid solutions, supplying the necessary power to all devices, hydraulic systems and electric systems of the machine. The mast, which normally is a structural element having a lattice or boxed construction and a long extension, is mechanically connected to the frame by means of a kinematic mechanism or at least one pin hinge to make a traverse movement in order to switch from a horizontal (transport) position to an substantially vertical (working) position, with the possibility of making corrections to obtain angles relative to the vertical which are useful to compensate for sloping ground and sometimes tilt the mast as much as necessary to reach extreme working positions (which corrections can be made by means of tie-rods, anchors, underhead systems, etc.) and/or to change the working radius of the machine, and performs the function of mechanically supporting, or guiding, operating equipment designed to work the ground according to a given processing technology. On the upper structure and/or on the mast and/or on the kinematic system motor means may be housed (e.g. winches, hydraulic or electric motors, hydraulic or electric gear motors, hydraulic jacks or electric linear actuators, etc.) arranged to drive the operating equipment by means of transmission means (which may be either rigid, e.g. cylinders with connecting pin, sprocket wheel and toothed rack, or flexible, e.g. ropes, chains, etc.), and ballast elements may also be housed thereon to increase the stability of the working machine.

The foundation construction machines known in the art include the so-called "drilling machines", wherein the operating equipment consists of interchangeable equipment and a drill or consolidation head or drive head. The interchangeable equipment may be, merely by way of example, a drilling tool (e.g. a bucket, a drill bit, a core sampler, a down-the-hole hammer, a three-cone bit, a jet grouting monitor, a bladed mixing tool) mechanically connected to drill pipes (whether simple, double with rods and pipes, with one or more passages for fluids, or telescopic rods called "kelly bars", of the "continuous flight auger", "soil displacement", "vibro rotation" types), or it may be ground consolidation equipment (e.g. of the "jet grouting", "soil mixing", "deep mixing", "turbojet", "vibro compaction", "stone column", "bottom feed system" types). The operating equipment may also be a vibro-drive equipment, e.g. a hammer or a vibrator, constituting a drive head configured to impart ground driving motion for foundation works (e.g. a sheet pile, a pipe, a metal section, etc.). The drill head, also referred to as "rotary", is mechanically connected to the mast and can be guidedly made to translate along the mast by means of a transmission system actuated by a motor means installed on the machine, or, for example, a winch, or, alternatively, by means of a hydraulic cylinder or a rack-type drive system or a gear motor. The drill head is mechanically connected to the interchangeable equipment in order to transfer thereto a rotary motion (hence a torque) and any pull and thrust forces that may be useful to allow the tool to penetrate the soil and be extracted from the borehole. Alternatively, the interchangeable equipment may be mechanically associated, in an indirect manner, to the mast and driven by the drill head (in this case, for example, hydraulic cylinders, or chain-type gear motor systems, or winches and ropes, or rack-and-pinion systems, or equivalent systems are used). The drive head may be associated with the mast either directly or indirectly. An additional winch installed on the upper structure, called "service winch", moves an auxiliary rope which, supported by additional pulleys installed at the top of the mast, can be used in order to move foundation elements, such as reinforcement cages, near the hole being made.

Foundation construction machines also include the so-called "micropile machines" and "tunnel machines", i.e. small-to-medium size machines (generally for drilling diameters of less than 300mm) employed for making foundations, subfoundations, tie beams, anchors, borings or consolidation works in both open (e.g. on a construction site) and closed (e.g. in buildings, tunnels, etc.) environments.

The foundation construction machines known in the art also include the so-called "diaphragm-wall excavation machines", wherein the operating equipment may be, by way of example, a cutter module, i.e. a frame to which rotary drums equipped with teeth and driven by gear motors are connected in order to make the excavation, or a grab module, i.e. a frame to which mobile clamshells are connected, which are moved by a hydraulic cylinder in order to make the excavation, or else it may be a dynamic compaction mass or a drive head. Such operating equipment may be mechanically connected in a guided manner along the mast, in which case they preferably exert a thrust force that facilitates soil penetration, or may be simply suspended by gravity from the mast head by means of a rope in order to work the soil in a substantially vertical direction.

In any case, on all known types of foundation construction machines, the operating equipment is mechanically associated in a direct manner to the mast, to be moved relative to the mast along the longitudinal direction of the excavation to be made in the ground (whether vertical, inclined, horizontal or sub-horizontal). From the examples described herein, a person skilled in the art will understand that the definition of foundation construction machine may comprise not only those machine types mentioned above merely by way of non-limiting example, but also other machine types (e.g. also those typically included in the EN16228:2014 product standard series) .

Foundation construction machines are typically equipped with a hydraulic system for the various above-described functions, including the self-moving assembly, the interchangeable equipment drive systems, the rotary, and the cylinders that move the mast. The hydraulic power necessary for the operation of the hydraulic motors and cylinders is supplied by a plurality of hydraulic pumps, which in turn receive mechanical power from the prime mover, which, as previously described herein, may consist of, for example, a Diesel endothermic engine, a combustion engine using alternative fuel (e.g. gas, natural gas, hydrogen, etc.), or one or more electric motors.

In recent years, the problem of polluting emissions generated by endothermic engines and the need for reducing noise in populated areas, considering also construction machinery like foundation construction machines, has become increasingly important. This is one of the reasons for the rapid development of machines equipped with an electric prime mover, instead of an endothermic one, and application variants that should permit using electric energy supplied directly by the grid or supplied by batteries or fuel cells and then distributed, after suitable processing, to the various electric motor means without the need for a so-called electric prime mover. Also, both motor types (Diesel and electric) may coexist in a hybrid solution. Said prime mover is usually connected mechanically to one or more hydraulic pumps (whether directly or indirectly via a coupler) in order to supply power to the hydraulic system. Alternatively, foundation construction machines may also be provided with electric motors dedicated to a single function, e.g. actuating the self-moving assembly, the rotary, or the tool driving device (using a gear motor or a winch) .

The electric energy required by the electric prime mover and/or by the electric motors installed on the individual components of the foundation construction machine can be supplied, for example, by means of an electric power cable connected to the electric network on the construction site or to an electric generator. The electric cable ensures a continuous supply of electric energy to the foundation construction machine, but at the same time it has some limitations of use that, in a typical construction environment, are not negligible. First and foremost, since foundation construction machines are frequently moved, sometimes even by long distances, the length of the electric cable limits the range of movement of the foundation construction machine and may create dangerous situations. When the machine has to be moved by a distance exceeding the length of the cable, it is necessary to arrange electric connection systems to establish a connection to the network, which permit disconnecting and reconnecting the cable in different spots of the construction site, or else it is necessary to move the external power source, e.g. an electric generator, by means of another machine, e.g. a construction crane.

Many applications are known in this field which relate to machines equipped with a wired power supply system:
- tunnel machines, which are powered by cable and are typically fitted with a reel, mounted on the upper structure, that winds and unwinds the cable. The length of the electric cable may typically vary from 20m to 50m (as length increases, the cross-section of the cable increases as well). The reel may be either operated manually or, preferably, electrically or hydraulically. For some application examples in the industry, reference can be made to the Soilmec SM-605 and SM-605DT machines, which were used on high-speed train construction sites as far back as 30 years ago, and more recent machines like the ST-120 model, or reel-equipped electric jumbos, up to the latest ZJ32Bi model by Komatsu, a fully-electric Rock Bolter with a reel integrated into the structure.
- Micropile machines with external power pack. Generally these machines consist of two bodies, i.e. a machine body with a self-moving structure, a mast and operating equipment, and a separate power pack, also movable (whether self-moving or towed by the machine), which carries the primary power unit. Typical power packs include an endothermic engine or an electric motor. In these cases as well, a reel may be installed on the power pack (or else on the machine, but this solution is bulkier and therefore less preferred), which reel connects the two units, typically by means of hydraulic hoses, but also by means of signal and power cables. In this regard, reference can be made to the MDT40SK machine (also available in a hybrid version with battery and electric power unit installed on the machine and supplementing the power provided by the power pack).

Among micropile machines and foundation cranes used as foundation construction machines, there are also some models fitted with an electric motor, such as Liebherr's LB16 Unplugged machine, which is equipped with batteries and permits connecting the cable directly to the rotary upper structure, at the rear near the ballast, and Yutong's electric machines (YTH200AE, YTO206AE, YTR360DH), which offer the option of working either by cable or battery, and which are equipped with a cable reel secured to the undercarriage, which cable transfers electric power to the upper structure through an electrohydraulic revolving mechanism that connects such two parts.

Stationary applications, i.e. applications that require the upper structure to remain stationary at the excavation location for a long time (typically for "single-pass" technologies like CFA, displacement, soil mixing, turbojet, jet grouting, diaphragm excavation, pile driving, micropiles, etc.), generally provide the utmost flexibility in positioning the connection of the electric cable: one may choose, without distinction, between a cable fixed to the self-moving part with a rotary power joint for energy transmission, which solution however involves problems of dirtiness because of the small distance from the ground, and a cable fixed to the upper structure, in which case it will be necessary to pay attention to the position of the cable during the movements.

Conversely, for "multi-pass" applications like kelly excavation, the frequent rotations required from the upper structure induce the necessity of a much more careful management of the cable in order to prevent damage. Therefore, solutions like a jointed arm positioned at the centre of rotation of the upper structure, which can remain stationary as the upper structure rotates, and from which the cable comes out to then reach the ground or the connection to the element supplying electric power, or a simple unconstrained arm positioned on the rear part of the upper structure, duplicated from solutions commonly employed on other machines, e.g. gully emptiers, can be easily adopted by those skilled in the art, and will not be described any further herein.

The presence of the electric cable makes it also necessary to use cable protection systems to protect the cable from damage, e.g. from crushing caused by vehicles passing over it. Since the cables supplying power to the electric motors carry low voltage, typically 400V or higher, a damaged cable may endanger the personnel on the construction site. Therefore, this risk must be effectively prevented.

An alternative solution to using an electric cable for supplying electric energy to the motors is the installation of an electric energy storage system, typically including rechargeable batteries, aboard the machine. Such batteries can be suitably sized for installation aboard the machine, and may have a total electric capacity ensuring a few hours of continuous operation, without requiring a physical connection to an external energy source while the machine is working. This solution also gives the possibility of moving the foundation construction machine without the restraint imposed by the electric connection cable.

On the other hand, the storage systems currently known in the art imply technical and cost-related problems mostly related to the size and weight of the batteries that are necessary to ensure a sufficient range and to the costs of the components. The main problem is housing aboard the foundation construction machine a storage system ensuring a range at least equal to a work shift of the machine, e.g. 8 hours, while at the same time complying with the dimensional constraints required of the machine for its transportation and operation. Very often, the size and weight of the components of the storage system are such as to provide a range only partially covering a work shift. This problem is especially felt on machines having a low weight-to-power ratio, such as micropile machines or medium-to-large size machines with high installed power because of high power requirements (e.g. vibrators, cutters, soil mixing rotaries, double heads, VDW, etc.). When the charge of the storage system becomes exhausted, it is necessary to stop working to recharge said system from an external energy source that is connected thereto by means of an electric cable, or one may continue to work while staying connected to the external energy source through an electric cable connected to the machine. However, this generally implies a reduction in available power and results in delayed work.

It is clear that the advantages given by the presence of the storage system are only limited to short periods of time. Combined with the considerable costs of the storage system, this does not make it economically and operationally advantageous for users to use a machine which is only equipped with a fixed storage system, i.e. a storage system fixed to the machine and not replaceable, based on known types of accumulators.

A known machine is disclosed at https://junttan.com/wp-content/uploads/2021/05/Junttan_PMx2e_Electric_Pile_D riving_Rig_EN.pdf (retrieved on 2022-07-06).

Another known machine is disclosed at https://bauer.de/export/shared/documents/pdf/bma/date nblatter/BG_Rotary_ Drilling Rig/eBG_33_DE_EN_905_883_ 1_2.pdf (retrieved on 2022-07-06).

### Summary of the invention

It is an object of the present invention to provide a machine having an electric storage system that makes it possible to overcome said limitations and which allows the foundation construction machine, even if small in size, to operate autonomously and continuously with a range of, for example, at least one work shift, or several consecutive work shifts, without any downtime, in addition to permitting the use of the machine at its nominal nameplate power with no restrictions. It will only be necessary to switch the storage system from the working phase to the replacement phase for a very short time, after which it will be possible to resume the working phase. The invention also concerns a method of replacing an electric storage system of a foundation construction machine.

According to the present invention, this and other objects are achieved through a machine and a method as set out in the appended independent claims.

It is understood that the appended claims are an integral part of the technical teachings provided in the following detailed description of the present invention. In particular, the appended dependent claims define some preferred embodiments of the present invention that include some optional technical features.

### Brief description of the drawings

- Fig. 1 shows a general view of a foundation construction machine according to a first embodiment of the present invention. More specifically, it shows a micropile drilling machine, but the description is also applicable to other types of foundation construction machines.
- Fig. 2 shows a detail of the interchangeable electric storage system in a replacement condition and of the handling equipment, according to a first embodiment thereof.
- Figs. 3A-3H show a sequence of steps for coupling the foundation construction machine to an interchangeable electric storage system, according to a first embodiment.
- Fig. 4 shows a fixed storage system installed aboard the foundation construction machine according to the present invention.
- Fig. 5 illustrates a further embodiment of the interchangeable electric storage system.
- Fig. 6 shows an embodiment of the handling equipment for handling the interchangeable electric storage system.
- Fig. 7 shows a further embodiment of the handling equipment for handling the interchangeable electric storage system.
- Fig. 8 shows a further embodiment of the handling equipment for handling the interchangeable electric storage system.
- Figs. 9A-F show a mode of electric connection when handling the interchangeable electric storage system, and a variant of the same.
- Figs. 10A-E show a sequence of steps for coupling the foundation construction machine to an interchangeable electric storage system, according to a further construction variant;
- Fig. 11 shows a mode of connection between the foundation construction machine and an external source of electric energy;
- Figs. 12A-12B show a sequence of steps for coupling the foundation construction machine to an interchangeable electric storage system, according to a further embodiment.

### Detailed description of the invention

The invention will now be described with reference to variants applicable to foundation construction machines dedicated to micropile drilling. This description should not however be considered to limit the scope of application, since the invention disclosed herein is applicable to foundation construction machines in general, including those for drilling large-diameter holes or for diaphragm excavation.

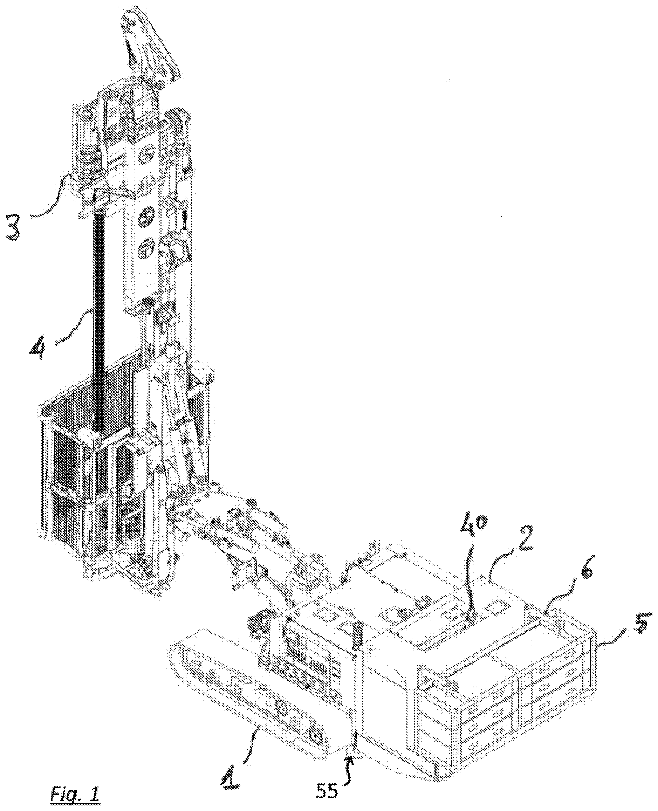

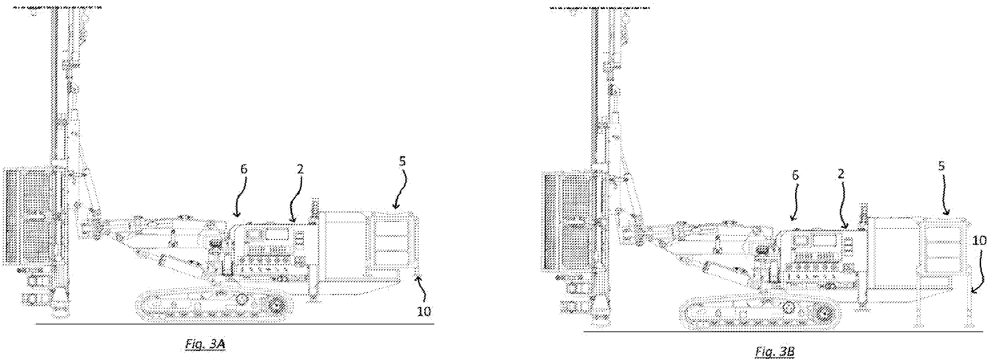

Fig. 1 shows a foundation construction machine according to one embodiment of the present invention. Like other foundation construction machines, it is equipped with a self-moving assembly 1 consisting of a tracked undercarriage, an upper structure 2 connected to the self-moving assembly (whether unconstrained about the pivoting axis, as indicated by the movements shown in Figs. 3A-3D, or fixedly mounted, or rotatable about a vertical axis through a slewing ring), which internally houses at least one electric motor 40 and the hydraulic and electric systems that supply power to the actuators, particularly to the self-moving assembly and to operating equipment 3, in this case consisting of a rotary, to which interchangeable drilling equipment 4 is connected, in this case a drill string for micropile drilling with its excavation tool (e.g. three-cone bit, three-blade bit, down-the-hole hammer, jet grouting monitor, etc.). The electric energy necessary for actuating electric motor 40 and any other drives in the machine is supplied by an interchangeable electric storage system 5, coupled to the rear end of the upper structure, mechanically connected thereto in such a way that it can be removed by means of handling equipment 6, and electrically connected to the electric system of the machine.

The foundation construction machine of the invention comprises:
- a self-moving assembly 1 for moving the machine on the ground,
- an excavation tool 4,
- at least one actuator 3 for moving said excavation tool 4,
- at least one electric motor 40 for supplying power to at least one movement of the machine,
- at least one interchangeable electric storage system 5 configured to assume a working condition, in which it is mechanically and electrically connected to the machine, and a replacement condition, in which it is at least mechanically disconnected from the machine,
- a handling equipment 6 for bringing the at least one interchangeable electric storage system 5 from the working condition to the replacement condition.

In the replacement condition, interchangeable electric storage system 5 may be disconnected from the machine both mechanically and electrically (e.g. when system 5 is not used for supplying electric energy to the machine), or may be disconnected mechanically while remaining electrically connected to supply energy to the machine. In particular, when system 5 is connected to the machine only electrically, the machine will not be able to work the ground normally, but will still be able to carry out some activities, in particular loading a charged system 5.

In the replacement condition, interchangeable electric storage system 5 can assume: a separation configuration, in which it is disconnected from the machine both mechanically and electrically, and an intermediate configuration, in which it can be mechanically disconnected from the machine, but remains electrically connected thereto. Alternatively, the electric and mechanical disconnections may occur simultaneously.

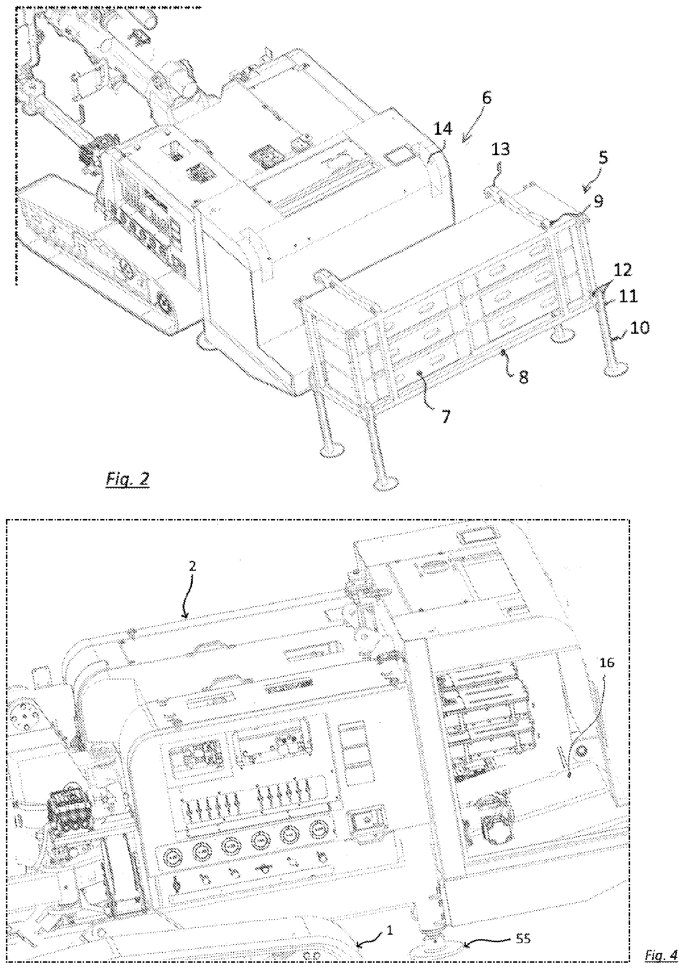

A first embodiment of interchangeable electric storage system 5 and handling equipment 6 is illustrated in Fig. 2. Interchangeable electric storage system 5 comprises:
- a plurality of storage units 7;
- a housing frame 8 for housing storage units 7.

In more detail, housing frame 8 includes docking points 13. Interchangeable electric storage system 5 is preferably made up of a plurality of storage units 7 (which may in turn contain one or more cells), which may consist of rechargeable batteries of any type (lithium-ion, etc.), or supercapacitors (also called "supercaps"), or fuel cells, in such a number as to reach the total electric capacity required to ensure that the foundation construction machine will have a range sufficient to cover a considerable fraction of a work shift or an entire work shift. In a further variant, interchangeable electric storage system 5 may be a hybrid one, including a combination of batteries and fuel cells. Thus, depending on the type of energy which is most easily available on the construction site, one can choose whether to recharge the battery part or the fuel-cell part, or both parts, of the storage system. In particular, it must be highlighted that an electric storage system 5 may be very heavy, thus being, in many cases, incompatible with the size of the machine and generating excessive moment, resulting in problems of rear stability. Also for this reason, the storage system may have to be limited and not be able to cover a whole work shift of 8-10 hours. Therefore, typical systems have a range of 3-6 hours. According to the invention, since every work shift is divided by a long break (e.g. a lunch break lasting at least one hour), it is possible to have sufficient capacity to ensure an operating range of the machine of 4-5 hours, then dismount the almost discharged storage system 5 and replace it with a second unit, which is already fully charged and ready to work. Such a swap can be made in a very short time, just a few minutes, during the lunch break, with no interruption in the production cycle. The same would be true if the capacity of the storage system could cover an entire work shift, in which case it would be possible to guarantee uninterrupted operation through one shift, but in the frequent case of double shifts the machine would then have to remain inoperative for 6-7 hours for charging the battery, or 2-4 hours if fast charging were used, which is however very costly, resulting in significant expenditures.

Conversely, by using electric storage systems 5 sized to supply energy for covering half a shift, i.e. 4 to 6 hours, it will be possible to change such units, replacing the almost exhausted one with a fully charged one, thereby ensuring continuous 24-hour operation, with just very brief pauses for the swap, which will occur during the breaks that the personnel on the construction site must take in any case. Moreover, this system makes it possible to fully exploit the available power during working hours, thus maximizing productivity on the construction site, which would be impossible if the batteries aboard the machine were recharged from the grid and simultaneously used for working. In such a case, the available power would be reduced. The geometry of said storage units is such that they can be arranged on one or more rows and easily stacked. The storage units have to be electrically connected to one another in series to give the voltage required by the motors and in parallel to give the desired current. The same also applies to individual cells, when storage units 7 are composed of a plurality of cells. They are arranged inside a housing frame 8 having an external geometry that allows it to be conveniently installed aboard the foundation construction machine. Since the weight of the electric storage system is generally considerable, according to a non-limiting first solution said system can be conveniently housed in the rear part of the foundation construction machine, in the place of the traditional rear ballasts. Its geometric shape will thus resemble a parallelepipedon, and the housing frame will contain several horizontal rows of storage units stacked over each other.

The electric connection of the storage units advantageously ends into a single connection interface providing a connection to the electric system of the foundation construction machine. It will thus be possible to quickly connect and disconnect the machine electrically from the electric storage system by acting upon such single connection interface. Such connection may be provided by means of a standard plug or a clamp-type coupler, but anyway it will ensure a quick coupling action.

In an alternative embodiment, an extension cable is also included, so that the battery (i.e. system 5) can be left electrically connected to the machine while loading and unloading frame 8 on/from machine 6, i.e. during the mechanical disconnection. The cable will make it possible to move frame 8 away from machine 6 without having to disconnect them electrically, so that the handling can be carried out using the available electric power, without resorting to auxiliary handling and power-supply means.

It will also be conveniently possible to use said connection interface for connecting interchangeable electric storage system 5 to an external electric charging station.

Housing frame 8 is conveniently provided with one or more lifting points 9 to allow lifting and moving the interchangeable electric storage system on the construction site, e.g. by means of a crane or another lifting means.

In addition, housing frame 8 may be fitted with a plurality of supports 10, preferably adjustable ones, having support surfaces or feet permitting the interchangeable electric storage system to be laid on the ground when it is disconnected from the drilling machine. In particular, said adjustable supports 10 can preferably be adjusted into a plurality of positions between a fully extended position and a fully retracted position, so that their support surfaces or feet can take different positions relative to housing frame 8 to increase or decrease the height from the ground of interchangeable electric storage system 5, and more specifically of storage units 7. Said adjustable supports may be, for example, four, or anyway in a number sufficient to ensure that the storage system can lie stably on the ground. The supports may be either telescopic or simply slidable, and may be either temporarily removable from housing frame 8 or pivoting and rotatable into a working condition (e.g. raised) and back into a dismounting configuration (i.e. lowered).

The adjustment system of the adjustable supports may have several fastening positions. In the case illustrated herein, considering a single support, it has a plurality of parallel through holes 11 along its section. On the housing frame, there are a pair of perforated plates 12, parallel to each other, allowing supports 10 to be adjustably fastened by means of a pin-type connection (not shown).

As an alternative, the frame may be fitted with height-adjustable supports 10, which can be moved either manually or by means of an actuator, e.g. a rack or worm screw system.

According to one embodiment, handling equipment 6 comprises:
- engaging or clutching means 14 adapted to be mechanically coupled to docking or fastening points 13 of interchangeable electric storage system 5;
- at least one actuator 25, preferably a linear one (e.g. a hydraulic cylinder), for moving said engaging or clutching means 14.

In this description, the terms "engaging means 14" or "clutching means 14" are used without distinction and without limiting the invention to either type of means. The same also applies to the terms "docking points 13" and "fastening points 13".

The frame is also provided with at least one docking or fastening point 13, whose geometric shape is such as to create a coupling, particularly a shape coupling, with at least one engaging means 14 comprised in handling equipment 6. Alternatively, such two parts may be mutually constrained by means of a removable connecting means, e.g. pin, screw, etc. Advantageously, in order to obtain the best load distribution, the shape coupling is provided by a pair of docking points 13, a right-hand one and a left-hand one, shaped as hooks and located at the upper ends of the frame, and by a corresponding pair of engaging means 14, a right-hand one and a left-hand one, cylindrical in shape and housed in the upper region of the rear end of the machine.

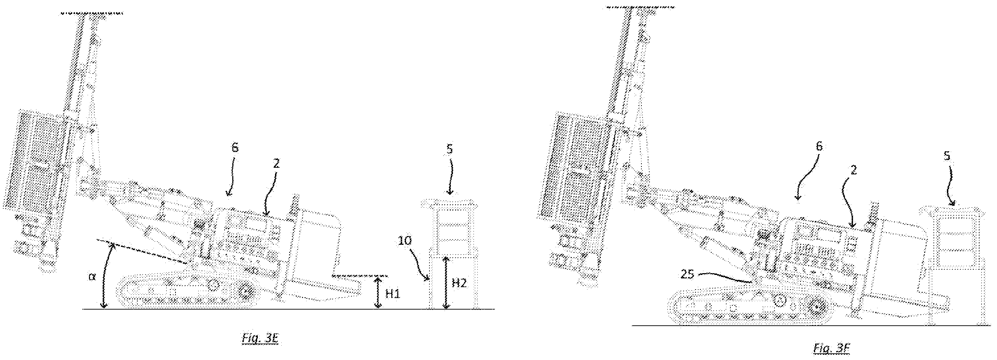

According to a first embodiment, in order to replace interchangeable storage system 5 of a foundation construction machine it is necessary to follow the procedure shown in Figures 3A-3D and 3E-3H, which concern, in particular, a machine equipped with a self-moving assembly 1 consisting of a horizontally pivoted undercarriage. During a first phase, shown in Figure 3A, the machine is in a working condition, with interchangeable storage system 5 mounted aboard and connected to the machine both electrically and mechanically, but, since its electric charge level is low, it needs to be replaced for the machine to be able to complete the work shift.

Subsequently, as shown in Figure 3B, the machine is positioned with the frame in the horizontal position, raising the interchangeable storage system to a height H2 from the ground, and then adjustable supports 10 are extracted and laid on the ground, after which they are locked relative to housing frame 8.

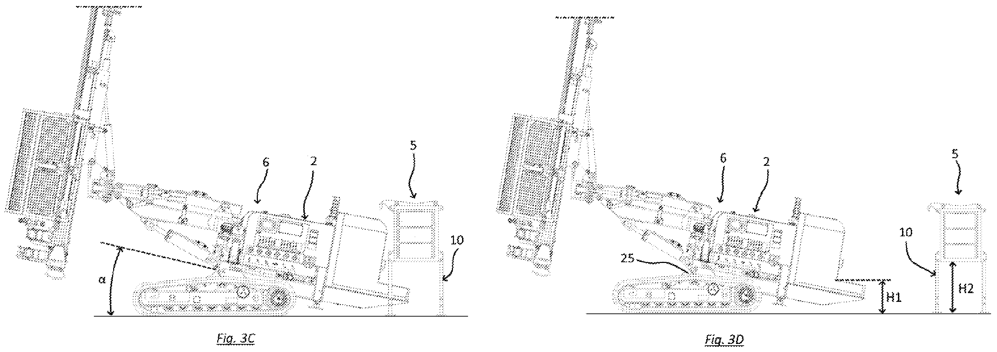

Subsequently, as shown in Figure 3C, the machine operator actuates handling equipment 6 to disengage engaging means 14 from docking points 13. In the embodiment shown in Fig. 3C, such disengagement is obtained by operating, in particular, actuators 25 of the horizontally-pivoted undercarriage 1, so as to vary the angle alpha of upper structure 2 relative to the ground and to the tracks, thus lowering the rear end of the upper structure of the machine to a height H1, which is lower than the previous height from ground H2 of interchangeable storage system 5. System 5 will thus be disengaged (at least mechanically) from the machine and will lie stably on the ground resting on supports 10.

During the next step, the operator actuates self-moving assembly 1 to translate the machine and move it away from the interchangeable storage system 5 just disconnected, as shown in Figure 3D.

During the next step, shown in Figure 3E, the operator actuates self-moving assembly 1 to translate the machine and approach another interchangeable storage system 5 having a charge level sufficient for a new work shift, which must be connected to the machine in order to bring it back into the working condition. Preferably, said electric storage system has been positioned beforehand near the foundation construction machine, e.g. by means of an external machine like an auxiliary crane. In particular, the storage system is positioned with the adjustable supports extended to a height sufficient to allow the machine to pass underneath the housing frame of the electric storage system. Alternatively, the machine with the discharged storage system may move to an area of the construction site where a charging unit has been installed (if sufficiently near). Then exhausted storage system 5 can be dismounted and a charged one be installed, so that all the necessary operations can be carried out autonomously without depending on an auxiliary crane or other lifting means. Subsequently, the operator will move the foundation construction machine towards the storage system to align engaging means 14 on the machine with docking points 13 on housing frame 8, with the rear end of the machine passing underneath the electric storage system, as shown in Figure 3F.

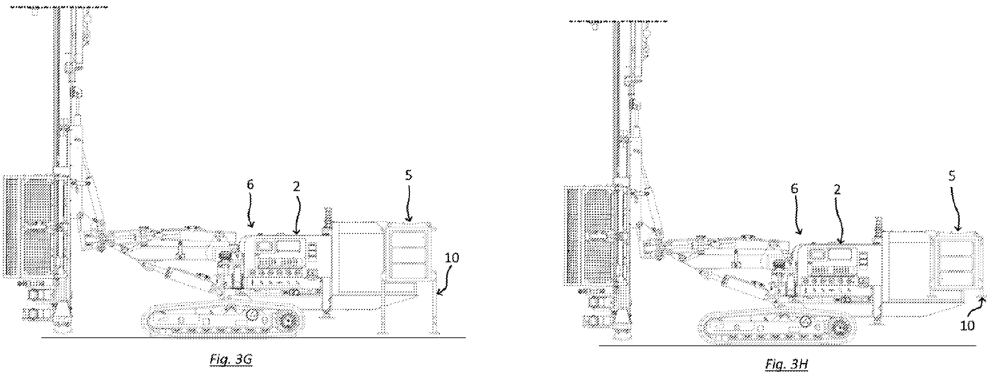

Handling equipment 6 will then be activated, particularly actuators 25 of the horizontally-pivoted undercarriage, in order to lift the rear end of the machine until it is parallel to the ground, as visible in Figure 3G. During this pivoting movement, engaging means 14 will move integrally with the upper structure until they will abut against corresponding docking points 13 of housing frame 8, thus creating a shape coupling that will make said engaging means 14 solidly connected to said docking points 13. This shape coupling provides a mechanical connection between the machine and the interchangeable electric storage system, and by continuing the pivoting movement it will be possible to transfer interchangeable electric storage system 5 aboard the machine. The storage system will thus be mechanically coupled to the machine (in the working configuration) as shown in Figure 3G. If necessary, a removable locking means (e.g. a pin, a flanged screw, etc.) may be inserted in order to make the coupled parts, and hence the machine (in particular, its upper structure 2) and storage system 5, mechanically integral with each other.

At this point, adjustable supports 10 can be retracted, as shown in Figure 3H, to prevent them from touching the ground when the machine is working.

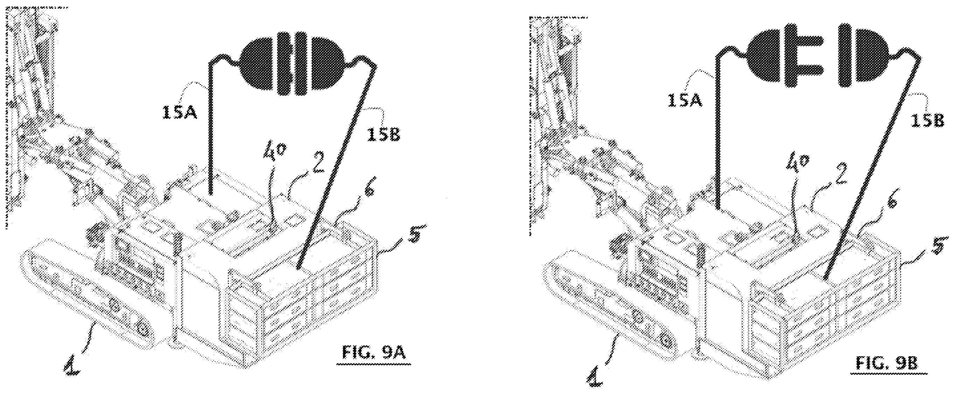

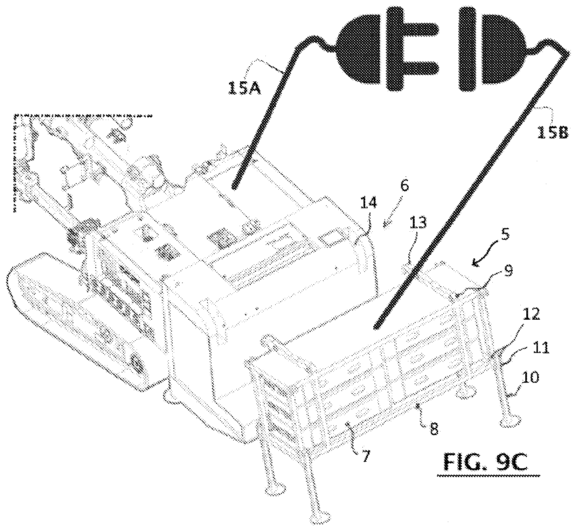

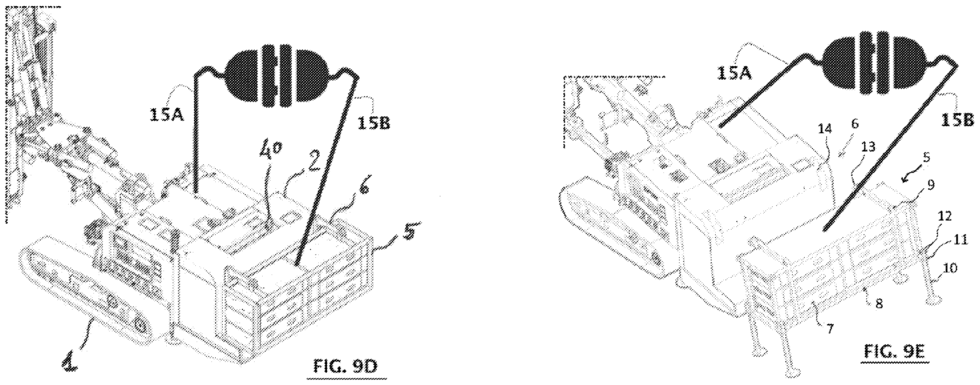

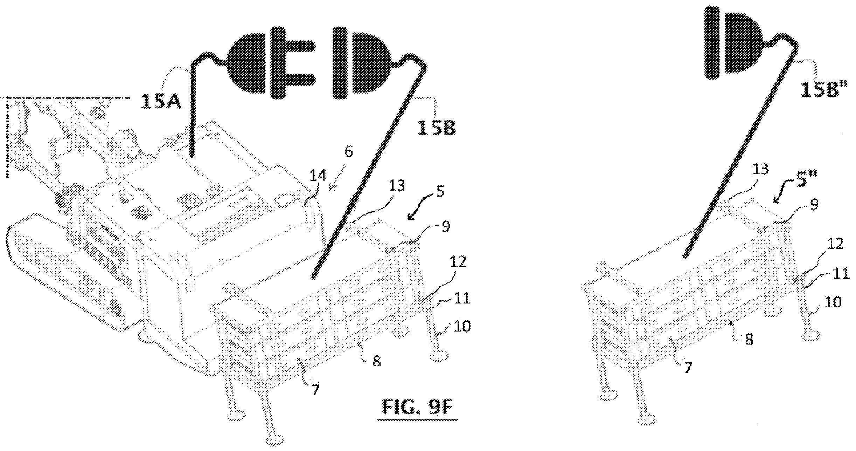

During steps 3A-3H of coupling and decoupling the interchangeable storage system, the foundation construction machine may receive power either from an external source of electric energy or from the interchangeable storage system itself, even if it has not been mechanically coupled yet, via a connection provided by an electric cable 15, as shown in Fig. 9.

According to one variant of the invention, therefore, the machine comprises at least one electric cable 15 for connecting interchangeable electric storage system 5 to an electric system of the machine, wherein the length of said electric cable 15 is sufficient to allow maintaining the electric connection between the electric system and interchangeable electric storage system 5 while the machine is mechanically decoupled from interchangeable storage system 5 and is making some movements on the ground. Such movements mainly serve to reach a position permitting the mechanical coupling with another interchangeable storage system 5.

Fig. 9A shows a closed electric connection between a machine (e.g. the upper structure 2) and an interchangeable storage system 5, i.e. the two units are electrically connected to each other.

Prior to starting the mechanical disconnection, the electrical disconnection phase is carried out as shown in Fig. 9B. The mechanical disconnection phase is then completed, as shown in Fig. 9C, after which interchangeable storage system 5 will be completely disconnected from the machine. In order to complete the mechanical disconnection movement, when made autonomously by the machine, the latter may also be equipped with a fixed storage system 16, also referred to as backup battery, which will ensure the necessary supply of energy. Alternatively, other energy storage systems may be used during this phase, e.g. supercaps or fuel cells, or, for example, the machine may be connected to the electric grid by means of a cable or may be connected to an external source of energy, e.g. an electric generator.

Figs. 9D-9F show an alternative sequence wherein, starting from Fig. 9D, which is wholly similar to the initial condition of Fig. 9A, interchangeable storage system 5 is fully dismounted mechanically first. After this step is complete, as indicated in Fig. 9B, the storage system is disconnected electrically. Preferably, the machine is positioned in the vicinity of the second interchangeable storage system 5", shown in Fig. 9F, which is a fully charged one or anyway a replacement unit. Let us consider, for example, the case wherein the first storage system is malfunctioning and cannot be quickly repaired, so that it needs to be immediately replaced. This architecture offers the additional advantage that the excavation work does not have to be interrupted for a long time, but only for the time strictly necessary for replacing the storage system. The machine, still connected to the first storage system, will position itself near the second one, or an external machine will place the second storage system near the machine.

After completing this step, the electric disconnection is performed, as shown in Fig. 9F. At this point, the machine will be advantageously connected to the second storage system 5" (fully charged or anyway operating correctly) and, once connected thereto, will be able to position itself properly in order to load it and switch back from the configuration of Fig. 9E to that of Fig. 9D.

Implementing the method represented in Figs. 9D-9F is possible because at least one of the two electric connection cables permits the mutual separation of the mechanical disconnection parts. Therefore, for example, one cable should be longer that strictly necessary (possibly wound on a reel), or an extensible (spiral-type) flexible cable should be used.

The advantage of this architecture is that it does not require any external power supply in addition to that of storage system 5 in order to complete the mechanical connection and disconnection movements.

When said cable 15A is used for connecting to an exhausted or defective first interchangeable storage system having a connection 15B and to a charged second interchangeable storage system 5" having an electric connection 15B", steps similar to those already described with reference to Figs. 3A-3H will be carried out in order to decouple the storage system to be replaced and bring the second storage system 5" to be installed near the foundation construction machine. Once the first storage system to be replaced has been mechanically decoupled and laid near the machine, it will be disconnected electrically 15A-15B, thus completing the decoupling operation. This connection may conveniently be provided by means of an electric cable, which will then be connected to the second storage system to be coupled to the machine, thereby supplying the machine with the power it needs to position itself and connect mechanically to the second interchangeable storage system.

The second storage system will then be mechanically coupled to the machine by following the procedure previously described herein with reference to Figs. 3A-3H and Figs. 9.

In a further variant, in order to allow the machine to perform all of the above-described operations without requiring an electric cable 15 to be connected to the interchangeable storage system or to an external source of electric energy, a fixed electric storage system 16, also referred to as backup battery, visible in Fig. 4, may be available aboard the machine. Thus, the machine may also be equipped with a fixed electric storage system 16 that cannot be removed by means of handling equipment 6. Such system 16 is intended to remain installed in the machine at all times, except when it needs to be replaced or serviced.

Said system 16 may be of the same type as storage system 5. For example, it may consist of, or comprise, one or more storage units, e.g. batteries, having sufficient capacity to allow the machine to operate continuously for the time necessary to complete the replacement of interchangeable electric storage system 5. Fixed storage system 16 may also be used while transporting and assembling the machine, e.g. when during such phases it is not possible to have interchangeable electric storage system 5 already installed. For example, if the drilling machine is transported on a truck trailer in a configuration lacking the storage system in order to limit its weight, fixed storage system 16 may be used for supplying power to the machine during the manoeuvres necessary for unloading it from the trailer and reaching an interchangeable storage system, which may have been made to arrive at the site on another means of transportation. Said fixed storage system aboard the machine may consist of a rechargeable battery, preferably of the same type and model as the ones included in storage system 5, 5". In particular, said fixed electric storage system 16, or backup battery, is of the high-voltage type and, via a high-voltage circuit, can supply sufficient power to the machine for the execution of at least some of the predefined movements necessary for safely completing the necessary operations within a predefined limited time. This means that, in the event of a failure of interchangeable electric storage system 5, fixed electric storage system 16 will ensure full operability of the machine for a time sufficient to complete the work in progress and return into a safe condition. For example, it may allow the execution of the manoeuvres necessary for extracting the tool from the soil or for safely laying down movable or suspended parts.

Installation of this fixed storage system 16 may occur by connecting the machine to an external source of electric energy (e.g. an electric generator) supplying the required power. Between rechargeable battery 16 and the power source at least one battery charger (not shown in the drawing) is interposed, which is used for recharging the battery. The battery charger may be of various types, e.g. normal charge, fast charge, etc.

The battery charger may be connected to interchangeable storage systems 5 for charging them, whether totally or partially, in special conditions (simple activities not requiring high power, temporary unavailability of an external charging system, e.g. due to a failure thereof).

The battery charger may even be of the wireless type, i.e. not necessarily physically connected to the machine, and operate in the same way as a wired one when positioned in proximity to the batteries to be recharged.

The fast battery charger with fast discharge battery may be external to the machine and connected by means of an electric cable to the electric system of the machine or directly to the battery charging line (via a suitable dedicated socket) for charging the battery.

Whenever necessary, a cooling system may be implemented for use in particular conditions, e.g. when charging fixed storage systems 16, in order to keep the temperature at the optimal value.

According to one variant of the invention, interchangeable electric storage system 5 can be connected to an electric system of the machine by means of a male-female connector, wherein a part of the connector is integral with interchangeable electric storage system 5 and another part of the connector is integral with the machine. The mechanical disconnection between interchangeable electric storage system 5 and the machine implies the electric disconnection of the connector. Therefore, one part of the connector is rigidly fixed to the machine (e.g. the male part), while the other part of the connector is rigidly fixed to interchangeable electric storage system 5 (e.g. the female part). The connector is electrically disconnected as handling equipment 6 mechanically dismounts interchangeable electric storage system 5 from the machine. In particular, the connector is of the plug-socket type.

In a further variant, the electric connection between the storage system and the machine is implemented by means of a connector made up of two half-connectors, i.e. a male one and a female one, not shown in the drawings, wherein the female half-connector may belong to the interchangeable storage system and the male half-connector may belong to the electric system of the machine, or vice versa. In particular, the two half-connectors are designed to be coupled together by mutually engaging automatically when handling equipment 6 brings the interchangeable storage system into the coupled configuration. Likewise, when handling equipment 6 moves the storage system from the connected configuration to the replacement configuration, the two half-connectors will disengage automatically, thereby electrically disconnecting the interchangeable electric storage system without requiring any manual intervention from an operator.

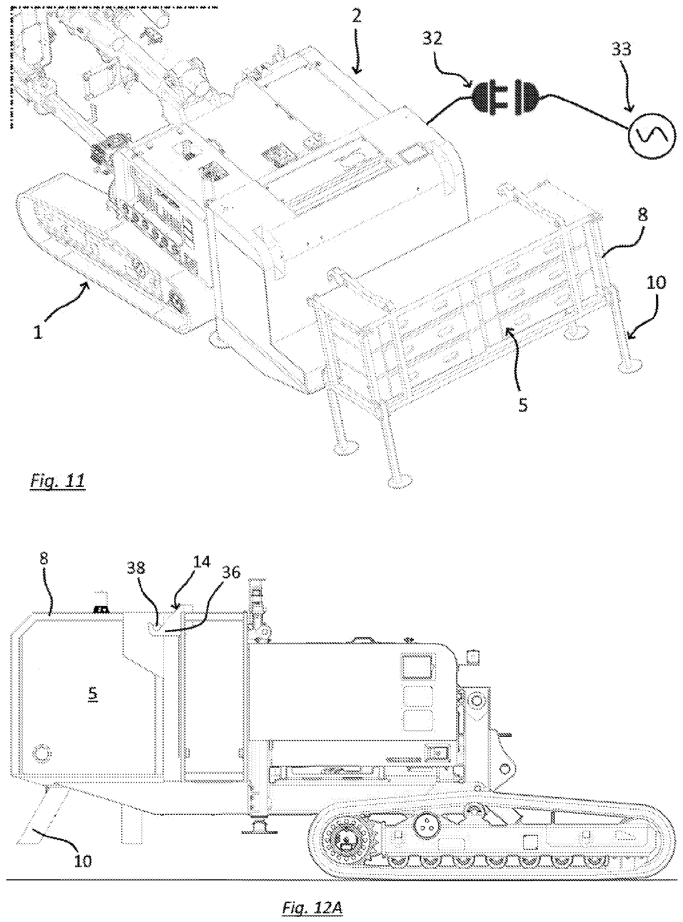

Conveniently, as shown in Figure 11, the machine comprises an electric system including a socket 32 to be connected, by means of a cable, to an external power network 33. Socket 32 is preferably located on self-moving assembly 1, particularly on the upper structure (which is conveniently rotatable). Therefore, the machine may be equipped with a socket 32 for connecting to an external source of electric energy (e.g. an electric grid or an electric generator, etc.), not shown in the drawing, which socket is connected to the electric system of the machine. Said socket may allow connecting an electric cable to the machine to supply the electric energy required by the machine and permit recharging fixed 16 or interchangeable 5 storage systems, or permit working in situations wherein no power is available from the storage systems.

When said male-female connector is used, no connection by electric cable will be necessary; therefore, the interchangeable electric storage system can be electrically coupled to the machine more quickly.

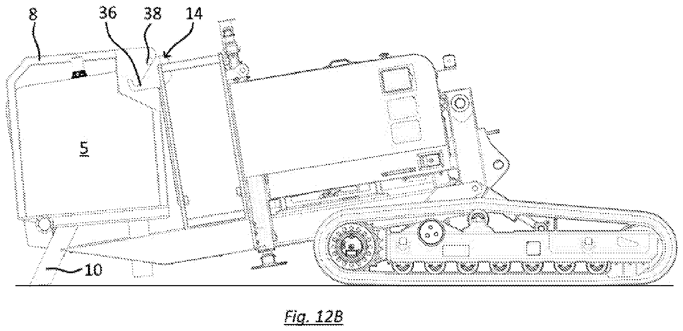

A further embodiment concerning the replacement of interchangeable storage system 5 in a foundation construction machine equipped with a self-moving assembly 1 consisting of a horizontally pivoted undercarriage is shown in Figures 12A and 12B. In Figure 12A, the machine is in a condition wherein interchangeable storage system 5 is mounted aboard and connected both mechanically and electrically to the machine, with its frame horizontal and adjustable supports 10 extended but raised from the ground and locked relative to housing frame 8. The handling equipment comprises, in this case, engaging means 14 consisting of an inclined plane, or "slide", that ends with a hook 36. The interchangeable electric storage system comprises docking or fastening points 13 consisting of pins 38, the diameter of which is suitable for establishing a shape coupling with hook-shaped part 36 of engaging means 14. In the condition of Figure 12A, through the effect of the weight of the storage system, docking points 13 of housing frame 8 get into a stable condition at the lowest point of the slide of engaging means 14 and engage with hook 36, thereby firmly locking frame 8.

Subsequently, handling equipment 6 can be operated in order to bring the machine into the condition shown in Figure 12B, which permits disengaging engaging means 14 from docking points 13. In the embodiment of Fig. 12B, in order to obtain such disengagement it is necessary to operate, in particular, actuators 25 of horizontally pivoted undercarriage 1 in order to change angle α of upper structure 2 relative to the ground and to the tracks, thus lowering the rear end of the upper structure of the machine until rear supports 10 of frame 8 begin touching the ground. When actuators 25 are then further operated to increase the inclination of the upper structure, since rear supports 10 cannot be lowered any further because they are already touching the ground, docking points 13 will be made to rise along the inclined plane of engaging means 14 until they reach a height above hook 36 of the engaging means. In the next step, the operator will operate self-moving assembly 1 to translate the machine, thereby moving the upper structure away from frame 8 and from interchangeable storage system 5. During this step, frame 8 will tend to rotate about the point where rear support 10 touches the ground, until also front supports 10 rest on the ground. With all supports 10 of frame 8 resting on the ground, frame 8 will no longer be able to make any rotation or translation, and docking points 13 of frame 8 will still be higher than hooks 36 of engaging means 14. Continuing the translation of the machine by operating self-moving assembly 1, it will move away from frame 8 without dragging frame 8 along, since the latter will be resting with all its supports 10 on the ground and engaging means 14 will be lower than docking points 13 and prevented from coupling thereto.

Storage system 5 will thus be disengaged from the machine (at least mechanically) and will remain stably on the ground resting on supports 10.

This process can also be reversed starting from a mechanically decoupled condition, by keeping the upper structure tilted and translating the machine to have it approach frame 8 that comprises storage system 5, so that docking points 13 of frame 8 will come in contact with the inclined plane of engaging means 14, thereby causing a rotation of frame 8 about rear support 10 and docking points 13 to climb the inclined plane of engaging means 14, thus returning the machine into the condition of Figure 12B. Subsequently, by operating handling equipment 6, and particularly actuators 25 of the horizontally pivoted undercarriage 1, the upper structure can be rotated to bring it back into the horizontal condition, and during such rotation docking points 13 will engage into the hooks of engaging means 14, establishing an at least mechanical coupling between electric storage system 5 and the machine, as shown in Figure 12A.

In the condition of Figure 12A, the supports raised from ground 10 can be unlocked and rotated about a hinge to tilt them into a second position that reduces their height from the ground, after which they can be locked again in this second position.

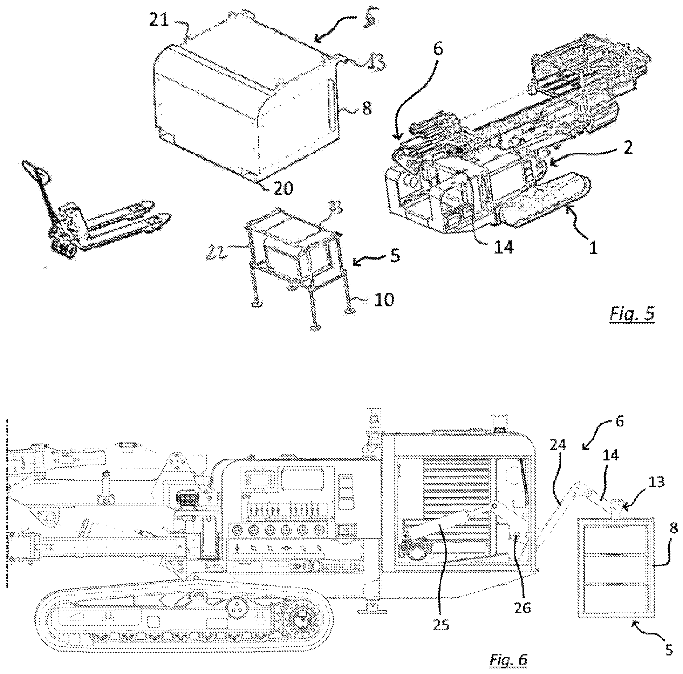

In the particular embodiment of Fig. 5, housing frame 8 comprises lifting points 20 for lifting it by means of a lift truck, and docking points 21. There is also an external assembling frame 22, equipped with engaging or clutching means 23 adapted to be mechanically coupled to docking points 21, and with height-adjustable supports 10.

In Fig. 5, housing frame 8 has, at its bottom end, a pair of lifting points 20, which in particular include elements with a hollow tubular cross-section, arranged horizontally to allow an external machine, e.g. a lift truck or forklift, to lift storage system 5 by inserting its forks into such lifting means. The hollow tubular elements 20 are, *de facto,* the previously illustrated lifting elements 6. Housing frame 8 is also equipped with docking points 13, adapted to engage with engaging means 14 on the machine, and coupling points 21, through which the housing frame can be connected to an external assembling frame 22. Such external assembling frame 22 is equipped with engaging means 23 to be coupled to housing frame 8 of interchangeable storage system 5, and also with lifting points 9, so that it can be lifted and transported by an external machine, e.g. a construction crane, as well as a plurality of height-adjustable supports 10. External assembling frame 22 may conveniently be wider than upper structure 2 of the machine, and may have such a geometric shape that it can be transported in proximity to the machine and then coupled, through engaging means 23, to docking points 21 of housing frame 8 of interchangeable storage system 5. Once said coupling between external frame 22 and storage system 5 has been established, the next procedure of decoupling the interchangeable storage system will be the same as the one already described above with reference to Figs. 3A-3D and Fig. 9. When interchangeable storage system 5 has been fully coupled to the machine, external assembling frame 22 can be removed from the storage system by mutually decoupling docking points 21 and engaging means 23, and then transported on external means of transportation outside the working area of the machine.

Interchangeable electric storage system 5 can, once it has been removed from the machine as mentioned above, be recharged by an external charging unit, while the foundation construction machine is working connected to an analogous interchangeable electric storage system 5". Every storage system must be appropriately sized to ensure a range of a few hours, e.g. 4 hours, and to complete the charging phase in a time shorter than the guaranteed range.

The machine will thus be able to operate through an entire shift, or through multiple shifts, so long as a sufficient number of interchangeable electric storage systems are available, considering that the replacement of a single storage system will require a very short time, with no impact on the machine's operability.

During those phases in which storage system 5 is mechanically disconnected from the machine (Figs. 3C, 3E, 9C, 9E, 9F), the latter could still operate either while remaining electrically connected to storage system 5 or to another storage system 5" or while being connected to an external power source by means of a cable (i.e. connected to the grid or to a generator); as a further option, it may operate on a rechargeable/regenerable power supply system that is always available on the machine during such phases, i.e. a fixed storage system 16.

The mechanical disconnection of the battery reduces the overturning moment component, and in such a configuration two choices are available: whether to allow limited, but safe, movements as required by the regulations, e.g. narrowing the range of possible drilling operations to, for example, vertical drilling or drilling with the mast tilted rearwards, i.e. towards the transportation configuration, or limiting the machine's operability to small angles relative to the vertical, or shortening the stroke of operating equipment 3 along the mast to comply with the stability conditions required by the regulations, or, as an alternative, inserting a stabilizing element capable of restoring full operability, e.g. a compensation ballast or a second storage system, even an exhausted one, to be used solely for improving the stability of the machinery.

Advantageously and safely, during the manoeuvres for unloading storage system 5 from the machine, the latter is first stabilized (e.g. by lowering stabilizer jacks 55 shown in Fig. 1) and the mast is conveniently lowered onto the ground, so that it can counter the risk of the machine turning over forwards, or it may be tilted back towards the transportation direction to avoid unbalancing the machine towards the front.

In a further construction variant of the handling equipment 6, shown in Fig. 6, the foundation construction machine may be provided with a self-moving assembly 1 consisting of a tracked undercarriage which may be either of the pivoting type, similar to the one previously described with reference to Fig. 3, or of the fixed type (e.g. with fixed or adjustable track, but not oscillating relative to upper structure 2). Said foundation construction machine is fitted with a loading means comprising a swivelling arm 24, housed in the rear part of the frame of the machine. To the end of said swivelling arm engaging means 14 is connected. Swivelling arm 24 is mechanically connected to an actuator 25, implemented as a hydraulic cylinder 25, and is also rotatably connected to frame 26 of the foundation construction machine by means of a pin 26. In an idle configuration, swivelling arm 24 and engaging means 14 are held in the vertical position.

Conveniently, in order to optimize the load distribution, handling equipment 6 may consist of, or comprise, a pair of swivelling arms 24, a pair of engaging means 14, a pair of actuators (e.g. hydraulic cylinders 25), and a pair of pins 26, respectively arranged on the right-hand side and on the left-hand side of the foundation construction machine.

When this construction variant is adopted, it is possible to mount interchangeable electric storage system 5 by first arranging each engaging means 14 perpendicular to the arm, or anyway in that position which is most appropriate, from a geometrical viewpoint, for coupling such means to docking points 13 on the interchangeable storage system. Each engaging means 14 may then be locked into the desired position, e.g. by means of pins (not shown in the drawing).

The at least one hydraulic cylinder or actuator 25 is then operated to extend its rod, acting upon swivelling arm 24 and causing it to rotate about pin 26, and hence causing engaging means 14 to descend to a level where it will be able to engage with corresponding docking point 13 of electric storage system 5. In this variant embodiment, docking points 13 conveniently have a cylindrical shape and are rigidly connected to the upper part of housing frame 8 of interchangeable storage system 5.

Once the handling equipment has been connected to the storage system, the at least one hydraulic cylinder or actuator 25 will be operated to retract its rod, and every arm 24 will rotate into the vertical position, thereby lifting the storage system 5 into the working position aboard the foundation construction machine.

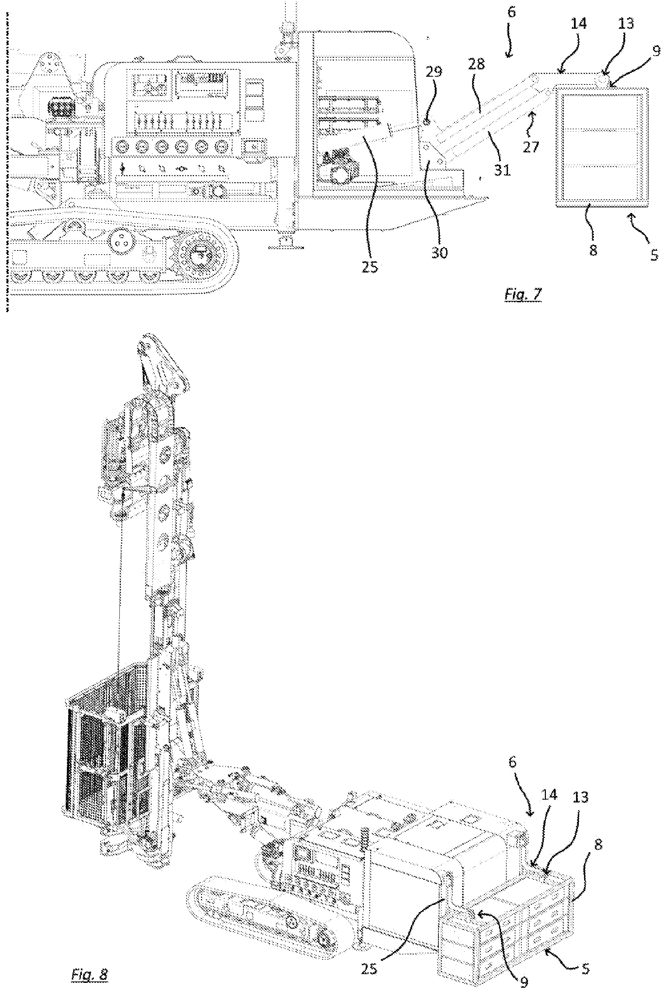

In a further construction variant, visible in Figure 7, handling equipment 6 comprises an articulated parallelogram 27 associated with the engaging means adapted to be coupled to docking means 13 of system 5. In particular, articulated parallelogram 27 comprises two elements or arms 28 and 31 having both a first end hinged to the machine (e.g. to a frame of the machine integral with upper structure 2) and a second end hinged to an engaging or clutching means 14, in particular a clutching means. Arms 28, 31 can be tilted while always remaining parallel to each other and always keeping said engaging means or element 14 oriented in the same way (horizontal in the illustrated example). According to this construction variant, element 28 of parallelogram 27 has a seat 29 adapted to connect it to the end of an actuator 25 consisting of a hydraulic cylinder, which operates said articulated parallelogram 27. At its ends, element 28 is connected to elements 30 and 14. Element 30 is integral with the frame of the machine and connected to elements 28 and 31. Element 31 is connected, at its ends, to elements 30 and 14, and always remains parallel to element 28. Lastly, element 14, which is connected to elements 28 and 31, acts as an engaging means and has a geometry that allows it to engage with docking point 13 on housing frame 8 of interchangeable electric storage system 5.

Conveniently, in order to optimize the load distribution, handling equipment 6 may comprise, or consist of, a pair of articulated parallelograms 27 and a pair of cylinders 25, respectively arranged on the right-hand side and on the left-hand side of the foundation construction machine.

In the idle position, each articulated parallelogram is held with its arms 28 and 31 in the vertical position, so as to reduce the occupied space to a minimum. When actuator 25 is operated to extend its rod, this will induce a rotation of the articulated parallelogram that will move downwards engaging means 14, simultaneously rotating it, until it reaches a position where it can be coupled to docking point 13 of the storage system.

When each actuator 25, consisting of a hydraulic cylinder, is operated again to retract the rod, the storage system will be raised and brought into the working position aboard the machine. This solution gives the advantage that storage system 5 can be handled along a trajectory that avoids any interference with the rear part of the frame of the machine while keeping the storage system always with the same orientation through the effect of gravity.

In a further variant, shown in Fig. 8, handling equipment 6 comprises at least one engaging or clutching means 14, solidly connected to one end of a linear actuator 25, e.g. a hydraulic cylinder. Engaging means 14 is adapted to engage with docking means 13 of interchangeable electric storage system 5. Linear actuator 25 is mounted to upper structure 2. Said linear actuator is, according to this variant, positioned vertically in proximity to the rear end of the machine.

Conveniently, in order to optimize the load distribution, handling equipment 6 may comprise, or consist of, a pair of engaging or clutching means 14 and a pair of actuators 25, respectively arranged on the right-hand side and on the left-hand side of the foundation construction machine.

The rear wall of upper structure 2 is provided with vertical grooves, in which engaging means 14 can slide, which are shaped substantially like angle brackets and protrude from the rear end of the machine. When each actuator 25 is operated to extend its rod, respective engaging means 14 integral with one end of the cylinder will be made to translate upwards. Vice versa, when each actuator 25 is operated to retract its rod, each engaging means 14 will translate downwards. Engaging means 14 are adapted to engage with docking means 13 of the storage system, so as to establish a mechanical connection between the machine and the interchangeable storage system.

In order to replace interchangeable storage system 5, actuators 25 will first have to be operated to lower the engaging means until storage system 5 rests on the ground. Then engaging means 14 can be disengaged from docking points 13, e.g. by further lowering engaging means 14 or by pulling out any coupling pins.

Subsequently, the machine will have to be moved by having self-moving undercarriage 1 approach the new interchangeable storage system, aligning docking points 13 of the latter with engaging means 14, held in the lowered position. During this step, the machine can receive power from the fixed backup battery 16, if available, or by means of an electric cable. When the alignment process is complete, the hydraulic cylinders or actuators 25 will have to be operated to raise engaging means 14 and also, along with them, storage system 5, which will thus be mechanically coupled to, and integrally "suspended" from, the rear part of the machine. The movement for lifting storage system 5 will preferably also result in the automatic electric connection of the same to the machine, e.g. by means of the previously described male-female connector.

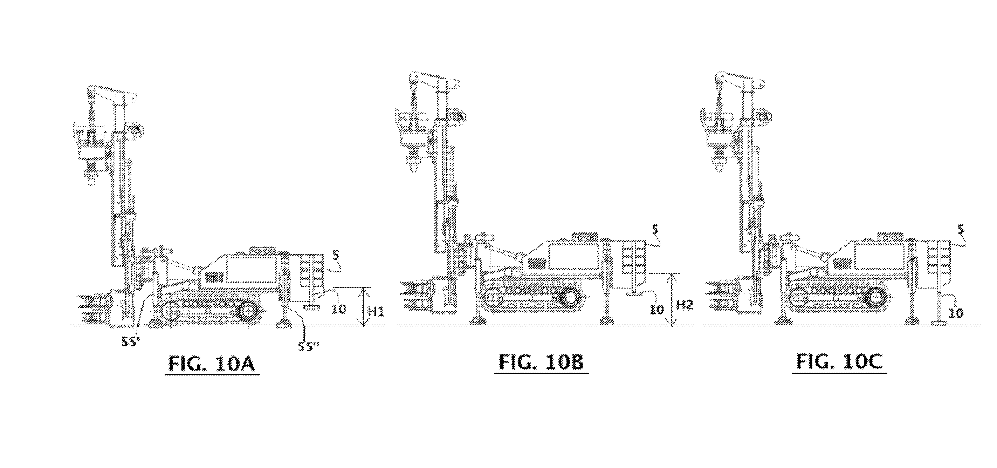

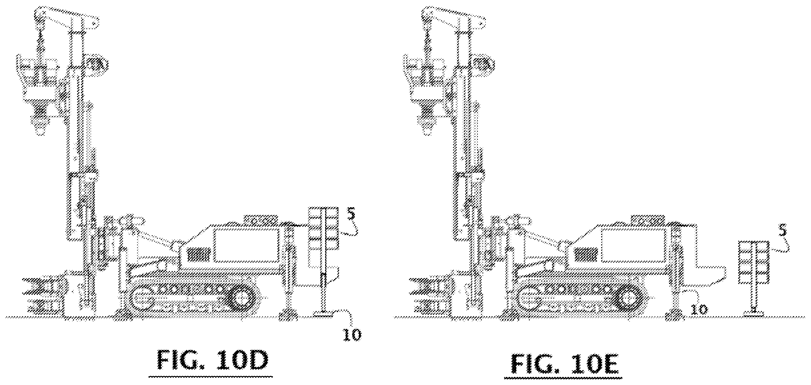

Fig. 10 shows a further construction variant and a different mode of decoupling storage system 5 from the machine. Fig. 10A shows the machine equipped with a pair of front stabilizers 55' and a pair of rear stabilizers 55". Usually, these stabilizers, preferably four in number, are present when undercarriage 2 is fixed or when the upper structure can rotate on a slewing ring relative to self-moving assembly or undercarriage 2, that is, when the undercarriage is not horizontally pivoted as shown in Fig. 3. Generally, the power circuits that operate the track pivoting jacks are also used for operating the front tracks. In some applications, the function of the two front stabilizers 55' may be performed by the mast, which constitutes, with its supporting base, the third front supporting point (the other two being rear ones 55").

By extending uactuators 55" and 55' or the mast, the machine is made to rise from the ground together with the storage system which, starting from an initial height H1, will reach at the end of the movement a height H2 higher than H1 (Fig. 10B). At this point, supporting elements 10 of storage system 5 are lowered or adjusted to switch from a raised configuration to a lowered configuration in proximity to the ground (Fig. 10C). By inversely operating actuators 55" and 55' or the mast (and its hydraulic longitudinal position relation with the upper structure or with the undercarriage) it is possible to lower the machine, thus bringing it again, in Fig. 10D, to the initial height of Fig. 10A. Storage system 5 will now be higher than, and at least mechanically decoupled from, the machine or upper structure 2. At this point (Fig. 10E), the machine can be moved away from decoupled storage system 5 and, if necessary, the storage system can be lowered, e.g. when adjustable supporting elements 10 consist of hydraulic stabilizers. The supporting elements are preferably two, with a supporting foot sufficiently wide to ensure the necessary stability, or may be four or in a different number, and are preferably arranged symmetrically relative to the longitudinal plane of the machine (e.g. when there are two of them, one will have to be on the left-hand side and the other on the right-hand side).

When adjustable supporting elements 10 are telescopic elements and motorized (e.g. hydraulic or electric) actuators, it is possible to start from Fig. 10A and lower extensible element 10 to raise storage system 5 relative to the machine, thus directly switching to the position represented in Fig. 10D, without having to use stabilizers 55", 55' or the mast.

In conclusion, therefore, storage system 5 or 5' is mechanically decoupled from the machine, in particular from upper structure 2, by determining a height variation between a lower initial position and a higher final position in which at least one of the two parts to be coupled will be, and such height difference will then be used, whether totally or partially, to induce the mechanical disconnection between the parts through a mutual separation of the same. The electric disconnection may occur before, during or after the mechanical disconnection phase.

In general, the invention concerns a method of replacing an interchangeable electric storage system 5 of a foundation construction machine, comprising the steps of:
- providing a machine according to the invention,
- actuating handling equipment 6 in order to mechanically decouple the at least one interchangeable electric storage system 5 that is present on the machine,
- electrically decoupling the at least one interchangeable electric storage system 5 from the machine,
- mutually positioning the machine and another interchangeable electric storage system 5 to be coupled to the machine,
- actuating handling equipment 6 in order to mechanically couple interchangeable electric storage system 5 to the machine,
- fixing, and electrically connecting, interchangeable electric storage system 5 to the machine.

Also the electric connection and/or disconnection can be effected by means of handling equipment 6. If a male-female connection between system 5 and the machine is not available, the electric disconnection will occur simultaneously with the mechanical one, effected by means of handling equipment 6.

In particular, the mutual positioning of the machine and of another interchangeable electric storage system 5 comprises the step of bringing the machine closer to such system 5, e.g. by moving the machine on the ground.

In particular, starting from the working configuration, the following steps are carried out:
bringing interchangeable electric storage system 5 into the intermediate configuration,
bringing interchangeable electric storage system 5 into the separation configuration.

Then, with a new interchangeable electric storage system 5, the following steps are carried out:
bringing such interchangeable electric storage system 5 into the intermediate configuration,
bringing interchangeable electric storage system 5 into the working configuration.

According to some embodiments, the method envisages the execution of the above-mentioned steps in the specified sequence.

As aforesaid, some embodiments do not include the step of bringing interchangeable electric storage system 5 into the intermediate configuration, as is the case when a male-female connection is available, because the mechanical disconnection will also bring about the electric disconnection of such system 5. In such a case, therefore, the system will directly switch between the working configuration and the separation configuration.

In general, starting from the working configuration, the method includes the steps of:
bringing interchangeable electric storage system 5 into the separation configuration,
replacing interchangeable electric storage system 5 with a new one,
bringing new interchangeable electric storage system 5 into the working configuration.

Handling equipment 6 may include at least one of: the moving devices of the machine, such as self-moving assembly 1 (e.g. tracks or wheels), excavation tool 4, actuator 3 for moving said excavation tool 4, the actuators for rotating, lowering, lifting or tilting upper structure 2, jacks or stabilizers 55, 55', 55''. Operating actuator or equipment 3 may be a simple or double (double-head) rotary, or a percussive unit (e.g. a top hammer), or a vibrating unit (vibrator, vibro-rotary, sonic head, etc.). Said actuator 3 may be a hydraulic one, but it is preferably an electric one including at least one electric motor that receives the necessary energy from the machine in order to actuate the drilling movements and drive excavation tools 4. According to other variants, handling equipment 6 includes further elements adapted to move interchangeable electric storage system 5 relative to the machine, and particularly: articulated parallelogram 27, or engaging means 14 and associated actuator 25. Handling equipment 6 is adapted to connect and disconnect, at least mechanically (and optionally also electrically), interchangeable electric storage system 5 to/from the machine.

In one variant, the replacement condition involves a step of supplying power to the machine by means of a cable that electrically connects the machine to interchangeable electric storage system 5.

In one variant, the replacement condition involves a step of supplying power to the machine by means of a cable that electrically connects the machine to an external power network. In particular, the cable is connected to the machine through the socket.

In one variant, the replacement condition involves a step of supplying power to the machine by means of a fixed electric storage system 16 mounted aboard the machine, which cannot be removed by means of handling equipment 6.

## Claims

1. Foundation construction machine comprising:
- a self-moving assembly (1) for moving the machine on the ground,
- an excavation tool (4),
- at least one actuator (3) for moving said excavation tool (4),
- at least one electric motor (40) for supplying power to at least one movement of the machine,
- at least one interchangeable electric storage system (5) configured to assume a working condition, in which it is mechanically and electrically connected to the machine, and a replacement condition, in which it is at least mechanically disconnected from the machine,
**characterized in that** it comprises:
- a handling equipment (6) for bringing said at least one interchangeable electric storage system (5) from the working condition to the replacement condition, and vice versa.

2. Machine according to claim 1, further comprising a fixed electric storage system (16) that cannot be removed by means of the handling equipment (6).

3. Machine according to claim 1 or 2, wherein the handling equipment (6) comprises:
- engaging or clutching means (14) adapted to be mechanically coupled to docking or fastening points (13) of the interchangeable electric storage system (5);
- at least one actuator (25) for moving said engaging or clutching means (14).

4. Machine according to any preceding claim, wherein the interchangeable electric storage system (5) comprises:
- a plurality of storage units (7);
- a housing frame (8) for housing the storage units (7).

5. Machine according to claim 4, wherein the housing frame (8) comprises height-adjustable supports (10) .

6. Machine according to any preceding claim, comprising at least one electric cable (15) for connecting the interchangeable electric storage system (5) to an electric system of the machine, wherein the length of said electric cable (15) is sufficient to allow maintaining the electric connection between the electric system and the interchangeable electric storage system (5) while the machine is mechanically decoupled from the interchangeable storage system (5) and is making some movements on the ground.

7. Machine according to any one of claims 1 to 5, wherein the interchangeable electric storage system (5) can be connected to an electric system of the machine by means of a male-female connector, wherein a part of the connector is integral with the interchangeable electric storage system (5) and another part of the connector is integral with the machine; wherein the mechanical disconnection between the interchangeable electric storage system (5) and the machine implies the electric disconnection of the connector.

8. Machine according to any preceding claim, comprising an electric system provided with a socket (32), located on the self-moving assembly (1), intended to be connected, by means of a cable, to an external power network (33).

9. Machine according to any preceding claim, wherein the handling equipment (6) comprises an articulated parallelogram (27) with which engaging means (14) are associated, which are adapted to be coupled to docking means (13) of the interchangeable electric storage system (5).

10. Machine according to any one of claims 1 to 8, wherein the handling equipment (6) comprises engaging means (14) integrally connected to one end of a linear actuator (25), wherein the engaging means (14) are adapted to be coupled to the docking means (13) of the interchangeable electric storage system (5).

11. System comprising:
- a machine according to claim 4, wherein the housing frame (8) comprises lifting points (20) for lifting it by means of a lift truck, and coupling points (21); and
- an external assembling frame (22), provided with engaging or clutching means (23) adapted to be mechanically coupled to the coupling points (21), and with height-adjustable supports (10).

12. Method of replacing an interchangeable electric storage system (5) of a foundation construction machine, comprising the steps of:
- providing a machine according to any one of claims 1 to 8,
- actuating the handling equipment (6) in order to mechanically decouple the at least one interchangeable electric storage system (5) that is present on the machine,
- electrically decoupling the at least one interchangeable electric storage system (5) from the machine,
- mutually positioning the machine and another interchangeable electric storage system (5) to be coupled to the machine,
- actuating the handling equipment (6) in order to mechanically couple the interchangeable electric storage system (5) to the machine,
- fixing, and electrically connecting, the interchangeable electric storage system (5) to the machine.

13. Method according to claim 12, wherein the replacement condition involves a step of supplying power to the machine by means of a cable that electrically connects the machine to the interchangeable electric storage system (5).

14. Method according to claim 12, wherein the replacement condition involves a step of supplying power to the machine by means of a cable that electrically connects the machine to an external power network (33).

15. Method according to claim 12, wherein the replacement condition involves a step of supplying power to the machine by means of a fixed electric storage system (16) mounted aboard the machine, which cannot be removed by means of the handling equipment (6).

## Patentansprüche

1. Tiefbaumaschine, aufweisend:
- eine selbstbewegliche Einheit (1) zum Bewegen der Maschine auf dem Boden,
- ein Aushubwerkzeug (4),
- mindestens ein Stellglied (3) zum Bewegen des Aushubwerkzeugs (4),
- mindestens ein Elektromotor (40), der dazu bestimmt ist, mindestens eine Bewegung der Maschine anzutreiben,
- mindestens ein austauschbares elektrisches Speichersystem (5), das so konfiguriert ist, dass es einen Arbeitszustand, in dem es mechanisch und elektrisch mit der Maschine verbunden ist, und einen Austauschzustand, in dem es zumindest mechanisch von der Maschine getrennt ist, einnehmen kann,
**dadurch gekennzeichnet, dass** sie aufweist:
- eine Handhabungseinrichtung (6), um das mindestens eine austauschbare elektrische Speichersystem (5) von dem Arbeitszustand in den Austauschzustand und umgekehrt zu bringen.

2. Maschine nach Anspruch 1, die ferner ein feststehendes elektrisches Speichersystem (16) aufweist, das nicht mit Hilfe der Handhabungseinrichtung (6) entfernt werden kann.

3. Maschine nach Anspruch 1 oder 2, wobei die Handhabungseinrichtung (6) aufweist:
- Eingriffs- oder Kupplungsmittel (14), die geeignet sind, mit Andock- oder Befestigungspunkten (13) des austauschbaren elektrischen Speichersystems (5) mechanisch gekoppelt zu werden;
- mindestens einen Aktuator (25) zum Bewegen der Eingriffs- oder Kupplungsmittel (14).

4. Maschine nach einem der vorhergehenden Ansprüche, wobei das austauschbare elektrische Speichersystem (5) aufweist:
- eine Vielzahl von Speichereinheiten (7);
- einen Gehäuserahmen (8) zur Aufnahme der Speichereinheiten (7).

5. Maschine nach Anspruch 4, wobei der Gehäuserahmen (8) höhenverstellbare Stützen (10) aufweist.

6. Maschine nach einem der vorhergehenden Ansprüche, aufweisend mindestens ein elektrisches Kabel (15) zum Verbinden des austauschbaren elektrischen Speichersystems (5) mit einem elektrischen System der Maschine, wobei die Länge des elektrischen Kabels (15) ausreichend ist, um die elektrische Verbindung zwischen dem elektrischen System und dem austauschbaren elektrischen Speichersystem (5) aufrechtzuerhalten, während die Maschine mechanisch von dem austauschbaren Speichersystem (5) entkoppelt ist und einige Bewegungen auf dem Boden ausführt.

7. Maschine nach einem der Ansprüche 1 bis 5, wobei das austauschbare elektrische Speichersystem (5) mit einem elektrischen System der Maschine mittels eines Stecker-Buchsen-Verbinders verbunden werden kann, wobei ein Teil des Verbinders fest mit dem austauschbaren elektrischen Speichersystem (5) und ein anderer Teil des Verbinders fest mit der Maschine verbunden ist; wobei die mechanische Trennung zwischen dem austauschbaren elektrischen Speichersystem (5) und der Maschine die elektrische Trennung des Verbinders impliziert.

8. Maschine nach einem der vorhergehenden Ansprüche, mit einem elektrischen System, das mit einer Steckdose (32) versehen ist, die sich an der selbstbeweglichen Einheit (1) befindet und dazu bestimmt ist, über ein Kabel an ein externes Stromnetz (33) angeschlossen zu werden.

9. Maschine nach einem der vorhergehenden Ansprüche, **dadurch gekennzeichnet, dass** die Handhabungseinrichtung (6) ein gelenkiges Parallelogramm (27) aufweist, dem Eingriffsmittel (14) zugeordnet sind, die dazu bestimmt sind, mit Andockmitteln (13) des austauschbaren elektrischen Speichersystems (5) verbunden zu werden.

10. Maschine nach einem der Ansprüche 1 bis 8, wobei die Handhabungseinrichtung (6) Eingriffsmittel (14) aufweist, die einstückig mit einem Ende eines linearen Aktuators (25) verbunden sind, wobei die Eingriffsmittel (14) dazu geeignet sind, mit den Andockmitteln (13) des austauschbaren elektrischen Speichersystems (5) gekoppelt zu werden.

11. System aufweisend:
- eine Maschine nach Anspruch 4, wobei der Gehäuserahmen (8) Hebepunkte (20) zum Anheben mittels eines Hubwagens und Kupplungspunkte (21) aufweist; und
- einen äußeren Montagerahmen (22), der mit Eingriffs- oder Kupplungsmitteln (23) versehen ist, die mechanisch mit den Kupplungspunkten (21) gekoppelt werden können, und mit höhenverstellbaren Stützen (10).

12. Verfahren zum Auswechseln eines austauschbaren elektrischen Speichersystems (5) einer Tiefbaumaschine, aufweisend die Schritte:
- Bereitstellen einer Maschine nach einem der Ansprüche 1 bis 8,
- Betätigen der Handhabungseinrichtung (6), um das mindestens eine an der Maschine vorhandene austauschbare elektrische Speichersystem (5) mechanisch zu entkoppeln,
- elektrisches Entkoppeln des mindestens einen austauschbaren elektrischen Speichersystems (5) von der Maschine,
- gegenseitiges Positionieren der Maschine und eines anderen austauschbaren elektrischen Speichersystems (5), das mit der Maschine gekoppelt werden soll,
- Betätigen der Handhabungseinrichtung (6), um das austauschbare elektrische Speichersystem (5) mechanisch mit der Maschine zu verbinden,
- Befestigen und elektrisches Verbinden des austauschbaren elektrischen Speichersystems (5) mit der Maschine.

13. Verfahren nach Anspruch 12, wobei der Austauschzustand einen Schritt der Stromversorgung der Maschine mittels eines Kabels aufweist, das die Maschine mit dem austauschbaren elektrischen Speichersystem (5) elektrisch verbindet.

14. Verfahren nach Anspruch 12, wobei der Austauschzustand einen Schritt der Stromversorgung der Maschine mittels eines Kabels aufweist, das die Maschine elektrisch mit einem externen Stromnetz (33) verbindet.

15. Verfahren nach Anspruch 12, wobei der Austauschzustand einen Schritt der Stromversorgung der Maschine durch ein feststehendes elektrisches Speichersystem (16) aufweist, das an der Maschine angebracht ist und nicht mit Hilfe der Handhabungseinrichtung (6) entfernt werden kann.

## Revendications

1. Machine de construction de fondation, comprenant :
- un ensemble automoteur (1) pour déplacer la machine sur le sol,
- un outil d'excavation (4),
- au moins un actionneur (3) pour déplacer ledit outil d'excavation (4),
- au moins un moteur électrique (40) pour fournir de la puissance pour au moins un déplacement de la machine,
- au moins un système de stockage électrique interchangeable (5) configuré pour prendre un état de travail, dans lequel il est mécaniquement et électriquement connecté à la machine, et un état de remplacement, dans lequel il est au moins mécaniquement déconnecté de la machine,
**caractérisé en ce qu'**elle comprend :
- un équipement de manipulation (6) pour amener ledit au moins un système de stockage électrique interchangeable (5) de l'état de travail à l'état de remplacement, et vice versa.

2. Machine selon la revendication 1, comprenant en outre un système de stockage électrique fixe (16) qui ne peut pas être retiré par l'intermédiaire de l'équipement de manipulation (6).

3. Machine selon la revendication 1 ou 2, dans laquelle l'équipement de manipulation (6) comprend :
- des moyens de mise en prise ou d'embrayage (14) adaptés pour être couplés mécaniquement aux points d'arrimage ou de fixation (13) du système de stockage électrique interchangeable (5) ;
- au moins un actionneur (25) pour déplacer lesdits moyens de mise en prise ou d'embrayage (14).

4. Machine selon l'une quelconque des revendications précédentes, dans laquelle le système de stockage électrique interchangeable (5) comprend :
- une pluralité d'unités de stockage (7) ;
- un cadre de logement (8) pour loger les unités de stockage (7).

5. Machine selon la revendication 4, dans laquelle le cadre de logement (8) comprend des supports ajustables en hauteur (10).

6. Machine selon l'une quelconque des revendications précédentes, comprenant au moins un câble électrique (15) pour connecter le système de stockage électrique interchangeable (5) à un système électrique de la machine, dans laquelle la longueur dudit câble électrique (15) est suffisante pour permettre de maintenir la connexion électrique entre le système électrique et le système de stockage électrique interchangeable (5) pendant que la machine est mécaniquement désaccouplée du système de stockage interchangeable (5) et effectue certains déplacements sur le sol.

7. Machine selon l'une quelconque des revendications 1 à 5, dans laquelle le système de stockage électrique interchangeable (5) peut être connecté à un système électrique de la machine par l'intermédiaire d'un connecteur mâle-femelle, dans laquelle une partie du connecteur est solidaire du système de stockage électrique interchangeable (5) et une autre partie du connecteur est solidaire de la machine ; dans laquelle la déconnexion mécanique entre le système de stockage électrique interchangeable (5) et la machine implique la déconnexion électrique du connecteur.

8. Machine selon l'une quelconque des revendications précédentes, comprenant un système électrique muni d'une prise (32), située sur l'ensemble automoteur (1), destinée à être connectée, par l'intermédiaire d'un câble, à un réseau électrique externe (33).

9. Machine selon l'une quelconque des revendications précédentes, dans laquelle l'équipement de manipulation (6) comprend un parallélogramme articulé (27) auquel sont associés des moyens de mise en prise (14), qui sont adaptés pour être couplés à des moyens d'arrimage (13) du système de stockage électrique interchangeable (5).

10. Machine selon l'une quelconque des revendications 1 à 8, dans laquelle l'équipement de manipulation (6) comprend des moyens de mise en prise (14) connectés d'un seul tenant à une extrémité d'un actionneur linéaire (25), dans laquelle les moyens de mise en prise (14) sont adaptés pour être couplés aux moyens d'arrimage (13) du système de stockage électrique interchangeable (5).

11. Système comprenant :
- une machine selon la revendication 4, dans lequel le cadre de logement (8) comprend des points de levage (20) pour le soulever au moyen d'un chariot élévateur, et des points de couplage (21) ; et
- un cadre d'assemblage externe (22), pourvu de moyens de mise en prise ou d'embrayage (23) adaptés pour être couplés mécaniquement aux points de couplage (21), et de supports ajustables en hauteur (10).

12. Procédé de remplacement d'un système de stockage électrique interchangeable (5) d'une machine de construction de fondation, comprenant les étapes consistant à :
- fournir une machine selon l'une quelconque des revendications 1 à 8,
- actionner l'équipement de manipulation (6) afin de découpler mécaniquement le au moins un système de stockage électrique interchangeable (5) qui est présent sur la machine,
- désaccoupler électriquement le au moins un système de stockage électrique interchangeable (5) à partir de la machine,
- positionner mutuellement la machine et un autre système de stockage électrique interchangeable (5) devant être couplé à la machine,
- actionner l'équipement de manipulation (6) afin de coupler mécaniquement le système de stockage électrique interchangeable (5) à la machine,
- fixer et connecter électriquement le système de stockage électrique interchangeable (5) à la machine.

13. Procédé selon la revendication 12, dans lequel l'état de remplacement implique une étape de fourniture de puissance à la machine par l'intermédiaire d'un câble qui connecte électriquement la machine au système de stockage électrique interchangeable (5).

14. Procédé selon la revendication 12, dans lequel l'état de remplacement implique une étape de fourniture de puissance à la machine par l'intermédiaire d'un câble qui connecte électriquement la machine à un réseau électrique externe (33).

15. Procédé selon la revendication 12, dans lequel l'état de remplacement implique une étape de fourniture de puissance à la machine par l'intermédiaire d'un système de stockage électrique fixe (16) monté à bord de la machine, qui ne peut pas être retiré par l'intermédiaire de l'équipement de manipulation (6).
